Europäisches Patentamt

European Patent Office

Office européen des brevets

(11) Publication number: **0 174 779 B1**

## EUROPEAN PATENT SPECIFICATION

(45) Date of publication of patent specification: **14.08.91**  (51) Int. Cl.⁵: **C09K 3/10**

(21) Application number: **85306142.2**

(22) Date of filing: **30.08.85**

(54) **Heat settable sealant material.**

(30) Priority: **05.09.84 GB 8422385**

(43) Date of publication of application:
**19.03.86 Bulletin 86/12**

(45) Publication of the grant of the patent:
**14.08.91 Bulletin 91/33**

(84) Designated Contracting States:
**BE DE FR IT NL SE**

(56) References cited:
**FR-A- 2 510 035**
**GB-A- 2 138 855**
**US-A- 4 507 355**

(73) Proprietor: **TBA Industrial Products Limited**
**20, St. Mary's Parsonage**
**Manchester M3 2NL(GB)**

(72) Inventor: **Lord, Allan**
**25 Milbury Drive**
**Littleborough Lancs(GB)**

(74) Representative: **Crux, John Anthony et al**
**P.O. Box 20 Ashburton Road West Trafford Park**
**Manchester M17 1RA(GB)**

## Description

This invention relates to heat-settable sealant material suitable for application to pipework for the conveyance of hot gas. Such pipework may for example form part of the exhaust system of the internal combustion engine of a vehicle.

One known form of heat-settable sealant material suitable for the stated purpose comprises discrete fibres of asbestos admixed with an aqueous solution of an alkali metal silicate (sodium silicate) so as to form a plastic paste with which holes formed by corrosion of the pipework can be stopped up. Another form comprises a felt of asbestos fibres, the felt being impregnated with an aqueous alkali metal silicate to form a bandage ('silencer repair bandage') which can be wrapped round, and moulded by hand round, the pipework to seal the holes. In either case, it is desirable to include in the sealant material a humectant, such as ethylene glycol, propylene glycol, glycerol or like polyhydroxy organic compound, to reduce the rate of water loss during storage of the material at ambient temperature and so keep it plastic. The material sets on heating (as when heated by hot exhaust gases) and forms an effective seal for several months.

The present invention is concerned with the provision of an asbestos-free sealant material, and is in part based on the discovery that other fibres, even though they are not heat-resistant in the sense that asbestos fibres are, can usefully be employed to reinforce heat-settable sealant material (and so keep it intact) during heat-setting on the substrate which it is to seal.

It has already been proposed that natural cellulose fibres (preferably of the bast variety) should be used and GB 2055857B discloses cellulose fibre-enclosing compositions of this kind.

Although such compositions are effective as described it has now been found that improved performance can be obtained by the use of an aramid fibre reinforcement.

The use of aramid fibres is described in US-A-4 330 442 entitled "Asbestos-free gasket forming compositions" to impart high tensile strength and creep relaxation to a water-laid rubberised gasket material, typically in the form of a felt sheet, comprising (in addition to the aramid fibres) phenolic fibres to confer high heat resistance, at least one inorganic or cork filler, and a rubber or resin binder.

According to the present invention an asbestos-free heat settable composition comprises an aramid fibre reinforcement in the form of a carded or needled non-woven web or felt, or a loosely woven or knitted fabric, impregnated with an aqueous solution or dispersion of an inorganic heat settable binder, optionally containing finely powdered inert filler and containing a humectant to reduce the rate of water loss from the composition during storage at ambient temperatures.

The use of these particular forms of reinforcement is particularly preferred. Not only are non-woven webs and/or felts likely to be cheaper than conventional textile fabrics, but all of the preferred reinforcements are more conformable than the latter. They wrap much better, a significant factor in achieving good sealing performance in use on a hot substrate.

The filler may be finely powdered clay, talc, silica or slate, or a mixture of two or more of these. Its function is to confer bulk, particularly to the set composition in use on a substrate.

Because aramid fibres are relatively expensive, the web, felt or fabric may include other synthetic organic fibres; in particular regenerated cellulose (viscose) fibres may be used. However it is desirable that the proportion of relatively low melting point and/or water-containing fibres should be kept below the amount at which delamination/cracking becomes a problem when the composition is subjected to service temperatures, in use.

Some experimentation may be necessary to arrive at a suitable fibre blend for a particular application, or end use temperature , of course. However, the fibrous reinforcement must possess both sufficient integrity and conformability to render it effective as a reinforcement which will bond the composition together whilst allowing it to be wrapped tightly around a substrate on which it is to form a seal. The binder is preferably a water soluble or water dispersable silicate, although selected borates or phosphates may also be used. Sodium silicate is particularly preferred.

The invention will now be described with reference to the following example.

## Example

A needled felt comprising about 2/3 (by weight) viscose rayon fibres and 1/3 (by weight) aramid fibres (those sold under the registered trade marks KEVLAR and NOMEX were equally effective) was impregnated with an aqueous dispersion comprising about 25% by weight of sodium silicate, (on a solids basis) and 13% by weight clay, with the balance being water. A minor proportion of monoethlyene glycol was included as a humectant, to reduce the rate of water loss from the impregnated felt during storage.

The product was highly conformable and exhibited very satisfactory integrity on application by wrapping around a pipe. On heating to about 260°C the composition hardened into a rigid mass without cracking/spalling, despite the temperature exceeding the charring point of the viscose fibres. The dried composite contained approximately 25% clay, 48% sodium silicate 9% of aramid fibres and 18% of (charred) viscose fibres, (all by weight).

## Claims

1. An asbestos-free heat settable composition comprising an aramid fibre reinforcement in the form of a carded or needled non-woven web or felt, or a loosely woven or knitted fabric, impregnated with an aqueous solution or dispersion of an inorganic heat settable binder, optionally containing finely powdered inert filler and containing a humectant to reduce the rate of water loss from the composition during storage at ambient temperatures.

2. A composition according to claim 1 wherein the reinforcement also includes other synthetic organic fibres.

3. A composition according to claim 2 wherein the other fibres are of regenerated cellulose.

4. A composition according to claim 2 or claim 3 wherein the proportion of relatively low melting and/or water-containing other fibres is kept below the amount at which delamination/cracking becomes a problem when the composition is subjected to service temperatures, in use.

5. A composition according to any of claims 1 to 4, wherein the binder is a water soluble or water dispersable silicate.

## Revendications

1. Composition thermodurcissable sans amiante comprenant un renfort de fibres d'aramide sous la forme d'un voile ou feutre non-tissé, cardé ou aiguilleté, ou d'un tissu tissé ou tricoté lâche, imprégné d'une solution ou dispersion aqueuse d'un liant thermoducissable inorganique, contenant en option une charge inerte en poudre fine et renfermant un agent humectant pour réduire le taux de perte d'eau de la composition lors du stockage à température ambiante.

2. Composition selon la revendication 1, dans laquelle le renfort renferme également d'autres fibres organiques synthétiques.

3. Composition selon la revendication 2, dans laquelle les autres fibres sont de la cellulose régénérée.

4. Composition selon la revendication 2 ou 3, dans laquelle la proportion d'autres fibres à point de fusion relativement faible et/ou contenant de l'eau reste en deçà de la quantité à laquelle la délamination/fendillement devient un problème lorsque la composition est soumise aux températures de service, à l'utilisation.

5. Composition selon l'une quelconque des revendications 1 à 4, dans laquelle le liant est un silicate soluble ou dispersable dans l'eau.

## Patentansprüche

1. Asbestfreies hitzehärtbares Material, enthaltend eine Aramidfaserverstärkung in Form einer cardierten oder genadelten, ungewobenen Bahn oder eines Filzes oder eines lose gewobenen oder gewirkten Gewebes, imprägniert mit einer wässrigen Lösung oder Dispersion eines anorganischen hitzehärtbaren Binders, gegebenenfalls mit fein verteiltem, gepulvertem inerten Füllstoff und enthaltend ein Befeuchtungsmittel, um die Schnelligkeit des Wasserverlustes aus dem Material während der Lagerung bei Umgebungstemperatur zu verringern.

2. Material nach Anspruch 1, dadurch gekennzeichnet, daß die Verstärkung auch andere synthetische organische Fasern umfaßt.

3. Material nach Anspruch 2, dadurch gekennzeichnet, daß die anderen Fasern aus regenerierter Zellulose sind.

4. Material nach Anspruch 2 oder 3, dadurch gekennzeichnet, daß der Mengenanteil an verhältnismäßig niedrig schmelzenden und/oder wasserhaltigen anderen Fasern unterhalb der Menge gehalten wird, bei welcher die Delaminierung/Rißbildung ein Problem wird, wenn das Material im Gebrauch Betriebstemperaturen unterworfen wird.

5. Material nach einem der Ansprüche 1 bis 4, dadurch gekennzeichnet, daß der Binder ein in Wasser lösliches oder in Wasser dispergierbares Silikat ist.